# EUROPÄISCHE PATENTSCHRIFT

(11) **EP 1 273 332 B1**
(45) Veröffentlichungstag und Bekanntmachung des Hinweises auf die Patenterteilung: **15.06.2005**
(21) Anmeldenummer: 02012575.3
(22) Anmeldetag: 06.06.2002
(51) Int. Cl.: B01D 27/08, B01D 35/30, F02M 37/22

(54) **Einfüllbecher für einen Flüssigkeitsfilter**
Device for filling a liquid filter
Dispositif de remplissage d'un filtre à liquide

(30) Priorität: 13.06.2001 US 880267
(43) Veröffentlichungstag der Anmeldung: 08.01.2003
(73) Patentinhaber: DEERE & COMPANY, Moline, Illinois 61265-8098 (US)
(72) Erfinder: Ephraim, Stephen Russel, Cedar Falls, IA 50613 (US); Sturm, Daniel Lee, Cedar Falls, IA 50613 (US); Naylor, Brent Charles, Waterloo, IA 50701 (US); Kaliban, Kurt Joseph, Waterloo, IA 50701 (US)
(74) Vertreter: Lau-Loskill, Philipp, Dipl.-Phys.

(56) Entgegenhaltungen:
- EP-A- 0 288 899
- US-A- 530 228
- US-A- 3 973 602
- US-A- 5 171 430
- US-A- 5 819 822

## Beschreibung

Die Erfindung betrifft einen Einfüllbecher für einen Flüssigkeits filter mit einer kreisförmig ausgebildeten Grundplatte, die wenigstens eine Öffnung zur Abgabe von Flüssigkeit aufweist, einem axial aus der Grundplatte herausragenden, zylindrischen Mantel, wobei die Grundplatte und der Mantel einen Becher ausbilden, und einem zentrischen Rohr, welches sich axial durch die Grundplatte erstreckt, wobei das Rohr ein Steigrohr, welches sich in das Innere des Bechers erstreckt, und einen mit dem Steigrohr verbundenen Stumpf aufweist, welcher sich von der Grundplatte aus nach außen erstreckt.

Mit der Verabschiedung von Standards zur Luftreinhaltung durch Regierungsämter in vielen Regionen der Welt, haben Dieselmotorenhersteller neue Kraftstoffsysteme eingeführt, um den engen Emissionsvorschriften zu genügen. Diese neuen Kraftstoffsysteme liefern höhere Einspritzdrücke und eine präzisere Abstimmung der Einspritzvorgänge, um Abgasemissionen zu steuern. Um diese Eigenschaften vorzusehen, wurden die Kraftstoffpumpenelemente und Einspritzkanäle neu gestaltet. Diese sind mit engeren Durchflussweiten als zuvor versehen, wodurch die Anfälligkeit gegen Verstopfung oder Beschädigung durch Kraftstoffverunreinigungen zunimmt. Eines der Mittel, um diese Kraftstoffsysteme zu schützen ist, effizientere Kraftstofffilter zu liefern, die Verunreinigungen im Größenbereich von 2 Mikron herausfiltern, im Vergleich zu 4 bis 5 Mikron-Filter von bisherigen Motoren.

Derartige Filter werden normalerweise innerhalb eines empfohlenen Service-Intervalls entsprechend dieselmotorischer Wartungspraktiken ausgetauscht. Wenn ein Geräte-Servicedienst ein blechdosenartiges ("Aufschraub"-) Kraftstofffilter an einem Dieselmotor austauscht, ist es üblich, das neue Filter vor der Installation mit Dieselkraftstoff vor-aufzufüllen. Dadurch wird die Einlaufzeit reduziert, die das System benötigt, wenn der Motor gestartet wird. Der Servicedienst gießt Kraftstoff in den oberen Teil des Filters, wobei in diesem Teil Öffnungen enthalten sind, die mit Kanälen in der gefilterten oder "sauberen" und mit Kanälen in der ungefilterten oder "verschmutzten" Seite des Filterelements verbunden sind. Bei diesem Vorgang ist es schwierig zu verhindern, dass ungefilterter Kraftstoff in die saubere" Seite des Filters gegossen wird. Das Ergebnis ist, dass Verunreinigungen in das Kraftstoffsystem gelangen können, sobald der Motor gestartet wird. Dies kann Schäden bei den Komponenten des Kraftstoffsystems hervorrufen und als Folge dessen die Motorleistung vermindern.

In der US 5,819,822 A wird eine Einfüllvorrichtung für ein Flüssigkeitsfilter offenbart, die einen durch eine Grundplatte und einen zylindrischen Mantel geformten Becher darstellt. Über einen Verbindungsstumpf kann die Einfüllvorrichtung mit dem Auslasskanal eines Flüssigkeitsfilters verbunden werden. Der Becher weist des Weiteren ein Steigrohr sowie Bodenöffnungen auf. Durch die Bodenöffnung wird Flüssigkeit in das Filter geleitet. Das Steigrohr weist eine Öffnung auf, welche zur Entlüftung des Filters beim Einfüllvorgang des Filters dient.

Die der Erfindung zugrunde liegende Aufgabe wird darin gesehen, einen Einfüllbecher der eingangs genannten Art anzugeben, durch welches die vorgenannten Probleme überwunden werden. Insbesondere soll ein Einfüllbecher zum Befüllen von Kraftstofffilter vorgeschlagen werden, mit der verhindert wird, dass ungefilterter Kraftstoff in die "saubere" Seite des Filters gelangt.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß weist der Einfüllbecher eine Aufsteckkappe auf, welche auf das Ende des Steigrohrs aufsteckbar ist, wobei zwischen Steigrohr und Aufsteckkappe ein Luftspalt ausgebildet wird. Das hohle Rohr ist derart angepasst, um mit einer Auslassöffnung eines Filters verbunden zu werden, wobei das Rohr ein hohles Steigrohr bildet, welches verhindert, dass Flüssigkeit außerhalb vom Filter in die Auslassöffnung eines Filters fließt. Durch das Steigrohr wird die Luft, die sich im Filter befindet, beim Auffüllen des Filters an die Umgebung geleitet.

In einer besonders bevorzugten Ausführung der Erfindung ist der Stumpf mit einem Außengewinde versehen und kann in eine Auslassöffnung eines Filters geschraubt werden.

In einer weiteren bevorzugten Ausgestaltung der Erfindung ist am Rande des Mantels des Einfüllbechers eine Vertiefung ausgeformt, die eine "Daumenhalterung" darstellt, so dass der Einfüllbecher im mit dem Filter zusammengebauten Zustand in einer Hand gehalten werden kann.

In einem bevorzugten Ausführungsbeispiel der Erfindung wird ein Einfüllbecher auf einen blechdosenartigen ("Aufschraub"-) Kraftstofffilter geschraubt. Das Kraftstofffilter enthält Einlassöffnungen, durch die ungefilterter Kraftstoff geleitet wird und eine zentrale, vorzugsweise mit einem Gewinde versehene Auslassöffnung, aus der gefilterter Kraftstoff fließt. Der Einfüllbecher enthält vorzugsweise eine kreisförmige Grundplatte und einen zylindrischen Mantel.

In einem bevorzugten Ausführungsbeispiel der Erfindung ist die Grundplatte fest mit dem Rohr verbunden. Außerhalb des Rohres befinden sich auf der Grundplatte eine oder eine Vielzahl von Öffnungen. Diese Öffnungen leiten Kraftstoff zu den Einlassöffnungen und zu einer ungefilterten oder "verschmutzten" Seite des Filterelements des Filters, nachdem der Einfüllbecher auf das Filter geschraubt wurde. Die Grundplatte ist von einem umlaufenden Mantel umgeben, der axial aus der Grundplatte herausragt und mit der Grundplatte einen Becher formt, der das Rohr umgibt. Das hohle Rohr erstreckt sich dabei axial durch die Grundplatte und durch den Mantel, wobei ein Teil des Rohres einen Stumpf formt, der aus der Grundplatte nach unten herausragt.

In einer weiteren bevorzugten Ausgestaltung der Erfindung ist die obere Seite des Steigrohres mit einer Aufsteckkappe versehen, wobei die Kappe und das Steigrohr einen Luftspalt zwischen sich bilden. Die Kappe verhindert, dass beim Auffüllen des Filters mit dem Einfüllbecher Verunreinigungen in das Steigrohr und in die "saubere" Seite des Filterelements gelangen. Der Luftspalt zwischen Steigrohr und Aufsteckkappe sorgt dafür, dass die Luft durch den Luftkanal entweichen kann, wenn der Kraftstoffpegel auf der "sauberen" Seite des Kraftstofffilters ansteigt.

Der Stumpf ist so ausgeformt, dass er mit der Auslassöffnung des Filters verbunden werden kann und bildet somit die Verbindung zwischen Einfüllbecher und Filter. Der Teil des Rohres, der den Stumpf formt ist mit dem Teil des Rohres verbunden, der das Steigrohr formt. Das Steigrohr ragt dabei aus der Grundplatte heraus in ein Inneres des Einfüllbechers hinein.

Der Stumpf verbindet den Einfüllbecher mit dem Filter. Der Stumpf und das Steigrohr zusammen verhindern, dass ungefilterter Kraftstoff in die Auslassöffnung oder "sauberen" Seite des Filterelements des Filters fließt. Der Stumpf und das Steigrohr bilden auch einen Luftkanal zur Entlüftung des Filters, wenn dieser mit Kraftstoff aufgefüllt wird.

In einer weiteren besonders bevorzugten Ausführung der Erfindung ist die Grundplatte derart ausgeführt, dass sie abdichtend mit einer auf der Abdeckplatte des Filters befindlichen Dichtung in Eingriff steht, wenn der Einfüllbecher auf das Filter montiert ist. Dadurch wird gewährleistet, dass beim Auffüllen des Filters mit dem Einfüllbecher keine Flüssigkeit vergossen wird und die Flüssigkeit nur die Möglichkeit besitzt, durch die Öffnung der Grundplatte in die Eingangsöffnung des Filters zu gelangen.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: einen perspektivischen Querschnitt eines erfindungsgemäßen Einfüllbechers, der an das obere Ende eines Aufschraub-Kraftstofffilters befestigt ist,

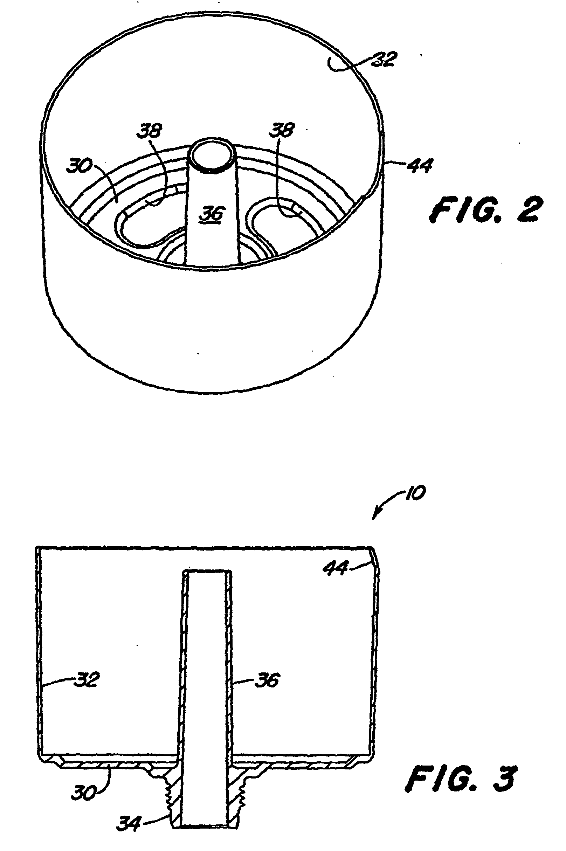

- Fig. 2: eine perspektivische Ansicht des Einfüllbechers aus Fig. 1 und
- Fig. 3: einen Querschnitt des Einfüllbechers aus Fig. 1

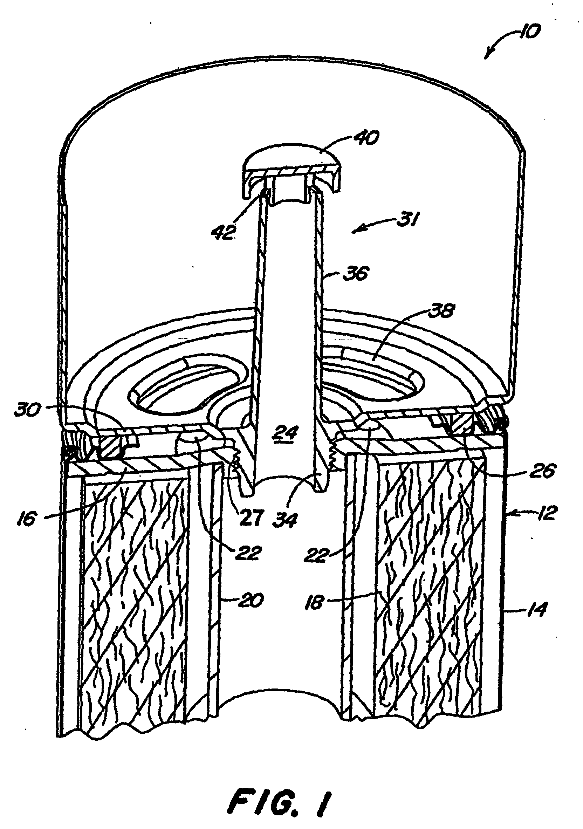

Fig. 1 zeigt einen als Wegwerfartikel ausgebildeten Einfüllbecher 10, der auf ein blechdosenartiges ("Aufschraub"-) Kraftstofffilter 12 geschraubt ist. Das Kraftstofffilter enthält ein Gehäuse 14 und eine Abdeckplatte 16, welche ein Filterelement 18 einschließen, welches seinerseits ein zentrisches, hohles Filterrohr 20 umgibt. Die Abdeckplatte 16 enthält eine Vielzahl von Einlassöffnungen 22, durch die ungefilterter Kraftstoff eintritt, und eine zentrische Auslassöffnung 24, aus der gefilterter Kraftstoff fließt. Auf die Abdeckplatte 16 ist eine herkömmliche Dichtung 26 montiert. Die Auslassöffnung 24 ist mit einem Innengewinde 27 versehen, so dass das Filter 12 auf herkömmliche Weise an eine Kraftstoffsystemkomponente (nicht gezeigt) eines Fahrzeugs geschraubt werden kann.

Der Einfüllbecher 10 enthält eine starre Grundplatte 30 und einen hieran angeformten starren zylindrischen Mantel 32, der axial aus der Grundplatte 30 herausragt. Ein zentrisches hohles Rohr 31 erstreckt sich axial durch die Grundplatte 30 und durch das Innere des Einfüllbechers 10. Ein Ende des Rohres 31 formt einen mit einem Außengewinde versehenen Stumpf 34, der, bezüglich des Einfüllbechers 10, außengelegen ist und der sich, ausgehend von der Grundplatte 30, vom Inneren des Einfüllbechers 10 hinweg erstreckt. Wie am besten in Fig. 1 zu sehen ist, ist der Stumpf 34 vorzugsweise derart angepasst, dass er in das Innengewinde 27 der Auslassöffnung 24 in der Abdeckplatte 16 des Filters 12 geschraubt werden kann. Das Rohr 31 bildet auch ein hohles zylindrisches Steigrohr 36, welches zum Stumpf 34 ausgerichtet ist und welches sich von der Grundplatte 30 hinweg in das Innere des Einfüllbechers 10 erstreckt. In die Grundplatte 30 sind mehrere Öffnungen 38 eingelassen. Nachdem der Einfüllbecher 10 an das Filter 12 befestigt ist wird Kraftstoff durch diese Öffnungen 38 zu den Einlassöffnungen 22 und zur ungefilterten oder unreinen Seite des Filterelements 18 geleitet.

Mit dem Stumpf 34 wird der Einfüllbecher 10 an das Filter 12 befestigt. Das Rohr 31, welches den Stumpf 34 und das Steigrohr 36 bildet, verhindert, dass ungefilterte Flüssigkeit, die in den Einfüllbecher 10 gegossen wird, in die Auslassöffnungen 24 oder saubere Seite des Filters 12 fließt. Das Rohr 31 bildet auch einen Kanal für aus dem Filter 12 austretende Luft, wenn dieser mit Flüssigkeit gefüllt wird. Auf das obere Ende des Steigrohres 36 ist eine Aufsteckkappe 40 aufgesetzt, um zu verhindern, dass Verunreinigungen in das Innere des Steigrohres 36 und in die saubere Seite des Filterelements 18 gelangen. Die Kappe 40 und das Ende des Steigrohres 36 bilden eine Lücke oder einen Luftspalt 42, um zu ermöglichen, das Luft entweichen kann, wenn der Kraftstoff in das Filter 12 eintritt. Eine Vertiefung oder bogenförmiger Ausschnitt 44 am Rande des Mantels 32 stellt eine Daumenhalterung dar, so dass der am Filter montierte Einfüllbecher 10 mit einer Hand gehalten werden kann.

Wenn der Einfüllbecher 10 an das Filter 12 befestigt ist, dann steht die Grundplatte 30 abdichtend mit der auf der Abdeckplatte 16 befestigten Dichtung 26 in Eingriff, so dass Kraftstoff in den Einfüllbecher 10 gegossen werden kann. Der in den Einfüllbecher 10 gegossene Kraftstoff fließt durch die Öffnungen 38 und durch die Einlassöffnungen 22 in die ungefilterte Seite des Filters 12, durch das Filterelement 18 hindurch in die saubere Seite des Filters 12, bis der Kraftstoffpegel bis zur Abdeckplatte 16 angestiegen ist. Der Einfüllbecher 10 kann dann entfernt und verbrannt oder ausrangiert werden. Das mit Kraftstoff gefüllte Filter 12, kann dann an den Motor installiert werden. Der Einfüllbecher 10 kann aus verschiedenen Materialien und mit verschiedenen Fertigungsprozessen hergestellt werden. Es eignet sich z.B. ein Spritzguss-Verbundwerkstoff. Dieser Einfüllbecher 10 kann in Verbindung mit Diesel- oder mit nicht für Diesel vorgesehene Motor-Kraftstofffilter sowie für hydraulische und andere Arten von Flüssigkeitsfilter, die einer Grundfüllung vor der Installation bedürfen, eingesetzt werden.

Diese Erfindung schlägt ein erschwingliches und praktisches Mittel zum Vorfüllen eines Kraftstoffaustauschfilters an einem abgasüberwachten Dieselmotor vor, wobei verhindert wird, dass Kraftstoffverunreinigungen in das Kraftstoffsystem gelangen.

## Patentansprüche

1. Einfüllbecher für einen Flüssigkeits filter (12), mit einer kreisförmig ausgebildeten Grundplatte (30), die wenigstens eine Öffnung (38) zur Abgabe von Flüssigkeit aufweist, einem axial aus der Grundplatte (30) herausragenden, zylindrischen Mantel (32), wobei die Grundplatte (30) und der Mantel (32) einen Becher (10) ausbilden, und einem zentrischen Rohr (31), welches sich axial durch die Grundplatte (30) erstreckt, wobei das Rohr (31) ein Steigrohr (36), welches sich in das Innere des Bechers (10) erstreckt, und einen mit dem Steigrohr (36) verbundenen Stumpf (34) aufweist, welcher sich von der Grundplatte (30) aus nach außen erstreckt und welcher so angepasst ist, dass er mit einer Auslassöffnung (24) des Filters (12) verbindbar ist, wobei das Steigrohr verbindert, dass die Flüssigkeit unter Umgehung des Filters (12) in die Auslassöffnung des Filters fließt, **dadurch gekennzeichnet, dass** eine Aufsteckkappe (40) vorgesehen ist, welche auf das Ende des Steigrohrs (36) aufsteckbar ist, wobei zwischen Steigrohr (36) und Aufsteckkappe (40) ein Luftspalt ausgebildet wird.

2. Einfüllbecher nach Anspruch 1, **dadurch gekennzeichnet, dass** der Stumpf (34) ein Außengewinde zum Einschrauben in die Auslassöffnung (24) umfasst.

3. Einfüllbecher nach einem der vorhergehenden Ansprüche, **dadurch gekennzeichnet, dass** an einem Rand des Mantels (32) eine Vertiefung (44) ausgeformt ist.

4. Kombination aus einem Einfüllbecher mit einem Kraftstofffilter (12), welches eine Dichtung (26) und wenigstens eine Auslassöffnung (24) enthält, **gekennzeichnet durch** einen Einfüllbecher (10) nach einem der Ansprüche 1 bis 3.

5. Kombination nach einem der Ansprüche 3 oder 4, **dadurch gekennzeichnet, dass** die Grundplatte (30) mit der Dichtung (26) abdichtend in Eingriff bringbar ist.

## Claims

1. A filler cup for a liquid filter (12), with a base plate (30) of circular form, having at least one opening (38) for delivery of liquid, a cylindrical sidewall (32) projecting axially from the baseplate (30), wherein the baseplate (30) and the sidewall (32) form a cup (10), and a central tube (31) which extends axially through the baseplate (30), wherein the tube (31) comprises a standpipe (36) which extends into the interior of the cup (10) and a stub (34) which is connected to the standpipe (36) and extends out from the baseplate (30) and is so adapted that it can be connected to an outlet opening (24) of the filter (12), whereby the standpipe prevents the liquid bypassing the filter (12) and flowing into the outlet opening of the filter, **characterized in that** a push-on cap (40) is provided and can be pushed on to the end of the standpipe (36), wherein an air gap is formed between the standpipe (36) and the push-on cap (40).

2. A filler cup according to claim 1, **characterized in that** the stub (34) has an external thread for screwing into the outlet opening (24).

3. A filler cup according to either of the preceding claims, **characterized in that** a recess (44) is provided at an edge of the sidewall (32).

4. A combination of a filler cup with a fuel filter (12) which includes a seal (26) and at least one outlet opening (24), **characterized by** a filler cup (10) according to any of claims 1 to 3.

5. A combination according to claim 3 or 4, **characterized in that** the baseplate (30) can be brought into sealed engagement with the seal (26).

## Revendications

1. Bécher de remplissage pour un filtre à liquide (12), avec une plaque de fond (30) de construction circulaire qui comporte au moins une ouverture (38) pour la distribution de liquide, une enveloppe cylindrique (32) faisant saillie axialement hors de la plaque de fond (30), la plaque de fond (30) et l'enveloppe (32) formant un gobelet (10), et un tube central (31) qui s'étend axialement à travers la plaque de fond (30), le tube (31) comportant un tube de refoulement (36) qui s'étend à l'intérieur du bécher (10) et un tronc (34) relié au tube de refoulement (36) qui s'étend vers l'extérieur à partir de la plaque de fond (30) et qui est adapté de manière à être raccordable à une ouverture d'évacuation (24) du filtre (12), le tube de refoulement empêchant l'écoulement du liquide dans l'ouverture d'évacuation (24) en contournant le filtre (12), **caractérisé en ce qu'**il est prévu un couvercle à emboîtement (40) qui peut être emboîté sur l'extrémité du tube de refoulement (36), une fente d'aération étant formée entre le tube de refoulement (36) et le couvercle à emboîtement (40).

2. Bécher de remplissage selon la revendication 1, **caractérisé en ce que** le tronc (34) comporte un filetage externe pour le vissage dans l'ouverture d'évacuation (24).

3. Bécher de remplissage selon l'une quelconque des revendications précédentes, **caractérisé en ce qu'**un enfoncement (44) est moulé sur un bord de l'enveloppe (32).

4. Combinaison constituée d'un bécher de remplissage avec un filtre à carburant (12), qui comprend une garniture d'étanchéité (26) et au moins une ouverture d'évacuation (24), **caractérisée par** un bécher de remplissage (10) selon l'une quelconque des revendications 1 à 3.

5. Combinaison selon l'une quelconque des revendications 3 ou 4, **caractérisée en ce que** la plaque de fond (30) peut être mise en prise étanche avec la garniture d'étanchéité (26).
